# EUROPÄISCHE PATENTANMELDUNG

(11) **EP 2 055 511 A1**
(43) Veröffentlichungstag der Anmeldung: **06.05.2009**
(21) Anmeldenummer: 08168039.9
(22) Anmeldetag: 31.10.2008
(51) Int. Cl.: B60G 21/05

(54) **Verbundlenkerachse**

(30) Priorität: 05.11.2007 DE 102007052632
(71) Anmelder: Benteler Automobiltechnik GmbH, 33102 Paderborn (DE)
(72) Erfinder: Zuber, Armin, 33175 Bad Lippspringe (DE); Töws, Rudi, 33100 Paderborn (DE)
(74) Vertreter: Dantz, Jan Henning

(57) **Zusammenfassung**

Eine Verbundlenkerachse, mit einem als Torsionsrohr ausgebildeten Querträger (2), der zwei jeweils an einem Längsträger (1) befestigte rohrartige Enden (5) aufweist, zwischen denen eine bereichsweise doppelwandige Längsrinne (4) eingeformt ist, ist so ausgebildet, dass parallel zum Querträger (2) verlaufend ein Stabilisator (3) angeordnet ist, der direkt oder indirekt starr an den Längsträgern (1) angeschlossen ist.

## Beschreibung

Die Erfindung betrifft eine Verbundlenkerachse nach dem Oberbegriff des Anspruchs 1.

Derartige Verbundlenkerachsen kommen üblicherweise in Kraftfahrzeugen zum Einsatz. Dabei ist der als Torsionsrohr ausgebildete Querträger so konzipiert, dass er insbesondere Torsionskräfte aufnehmen kann, wie sie bei einer wechselseitigen Belastung einer Radaufhängung des Kraftfahrzeuges entstehen. Daneben soll der in diesem Sinne eingesetzte Querträger eine ausreichende Biegesteifigkeit aufweisen.

Üblicherweise wird der Querträger so hergestellt, dass zur Bildung der Längsrinne ein entsprechend ausgebildetes Formwerkzeug in ein Rohr gedrückt wird, wobei die Tiefe der Längsrinne so bemessen ist, dass sie zumindest an ihrem Grund mit der gegenüberliegenden Wandung des Rohres eine Doppelwandung bildet.

Im Querschnitt ist der Querträger im Bereich der Längsrinne V- oder U-förmig ausgebildet. Zur Verdeutlichung sei auf die DE 196 53 959 C1 verwiesen, in der ein solcher Profilstab gezeigt und beschrieben ist.

Daneben sind gattungsfremde Verbundlenkerachsen bekannt, deren Querträger als offene Profile U- oder V-förmig aus einer Platine geformt werden.

Nachteilig stellt sich jedoch hierbei das relativ hohe Gewicht dieser offenen Profile dar, das insoweit zu einer angestrebten gewichtsreduzierten Bauweise kontraproduktiv ist.

Dieser Nachteil ist in dem Maße bei den gattungsgemäßen Torsionsrohren nicht zu beklagen. Hier jedoch stößt die Belastbarkeit bei sehr hohen Rollraten an ihre Grenzen.

Vor allem bei sogenannten Plattformstrategien, bei denen konzeptionell gleiche Bauteile für unterschiedliche Kraftfahrzeuge zum Einsatz kommen, müssen aufgrund der unterschiedlichen Belastungen jeweils daran angepasste Torsionsrohre zum Einsatz kommen.

Die Realisierung dieser Vielfalt an notwendigen Torsionsrohren ist jedoch mit einem erheblichen entwicklungs- und fertigungstechnischen Aufwand verbunden, letzterer insbesondere aufgrund relativ hoher Werkzeugkosten.

Zwar ist es bekannt, die genanten offenen Profile mit integrierten Stabilisatoren zu versehen, die insoweit mit den Profilen eine Baueinheit bilden, jedoch sind diese Baueinheiten schwerer als Torsionsrohre, insbesondere bei der Verwendung für kleine Rollraten.

Alles in allem sind je nach Rollratenbereich die Verbundlenker nur mit erheblichen Kompromissen hinsichtlich Gewicht und Kosten konzipierbar, so dass bei Einsatz einer einzigen Querträger-Profilart notwendige Achsvarianten nicht durchgängig gewichtsoptimiert konstruiert werden können.

Der Erfindung liegt die Aufgabe zugrunde, eine Verbundlenkerachse der gattungsgemäßen Art so weiterzuentwickeln, dass mit konstruktiv und fertigungstechnisch geringem Aufwand ihre Verwendungsfähigkeit und ihre Belastbarkeit verbessert wird.

Diese Aufgabe wird durch eine Verbundlenkerachse mit den Merkmalen des Anspruchs 1 gelöst.

Durch diese konstruktive Ausbildung der Verbundlenkerachse wird ein gewichtsoptimiertes Bauteil geschaffen, mit dem neben erweiterten Rollratenbereichen auch höhere Rollraten abgedeckt werden können.

Dabei resultiert die Gewichtsoptimierung insbesondere aus einer möglichen Veränderung des Durchmessers des vorzugsweise stabförmigen Stabilisators bei quasi gleichbleibendem Torsionsrohr.

Mit geringem fertigungstechnischem Aufwand sind problemlos Variationen hinsichtlich der Belastbarkeit möglich, wie sie bei Plattformlösungen gefordert sind.

Dabei ist die Erfindung insofern sozusagen zukunftsfähig, als die neue Verbundlenkerachse problemlos bei extrem hohen Rollraten eingesetzt werden kann, wie sie bislang noch nicht technisch realisierbar sind.

Nach einer vorteilhaften Weiterbildung der Erfindung sind das Torsionsrohr und der Stabilisator getrennt voneinander an den Längsträgern drehmomentgesichert befestigt.

Dabei kann der Stabilisator, der aus einer Stange oder einem Rohr besteht, mittels endseitig angeschlossener Halterungen mit den Längsträgern verbunden sein.

Diese Variante wird bevorzugt dann gewählt, wenn der Stabilisator in der Längsrinne des Querträgers, d.h. des Torsionsrohres, platziert ist, wodurch sich eine Optimierung des Bauraumbedarfs ergibt.

Auf solche Halterungen kann in dem Fall verzichtet werden, dass der Stabilisator neben dem Querträger und parallel dazu verläuft und unmittelbar an den Längsträgern befestigt ist, vorzugsweise durch Verschweißen.

Bei dieser Anordnung des Stabilisators wird insoweit eine Berührung des Querträgers vermieden, so dass dieser und der Stabilisator unabhängig voneinander die auftretenden Lasten aufnehmen. Überdies kann die Dimensionierung des Stabilisators, vornehmlich durch Veränderung des Querschnitts, unabhängig von der Form und den räumlichen Gegebenheiten des Querträgers entsprechend den Anforderungen gewählt werden, so dass bei Erhöhung der Torsionsrate lediglich der Stabilisator angepasst wird, während das Torsionsrohr unverändert bleiben kann.

Zu einer Optimierung der Standzeit vor allem des Torsionsrohres wie auch des Stabilisators trägt ein geeigneter Werkstoff mit einem hohen Elastizitäts-Modul und einer hohen Dauerbruchfestigkeit bei.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

### Es zeigen:

- Figur 1: eine erfindungsgemäße Verbundlenkerachse in einer perspektivischen Ansicht
- Figur 2: eine Teilansicht eines weiteren Ausführungsbeispiels der Erfindung in einem Längsschnitt.

In den Figuren ist eine Verbundlenkerachse eines Kraftfahrzeuges dargestellt, mit einem als Torsionsrohr ausgebildeten Querträger 2, der zwei rohrartige Enden 5 aufweist, an die jeweils ein Längsträger 1 angeschlossen ist.

Zwischen den rohrartigen Enden 3 ist eine Längsrinne 4 eingeformt, die zumindest an ihrem Grund doppelwandig ist, wobei der Querträger 2 aus einem Rohr besteht, in das die Längsrinne 4 eingedrückt ist.

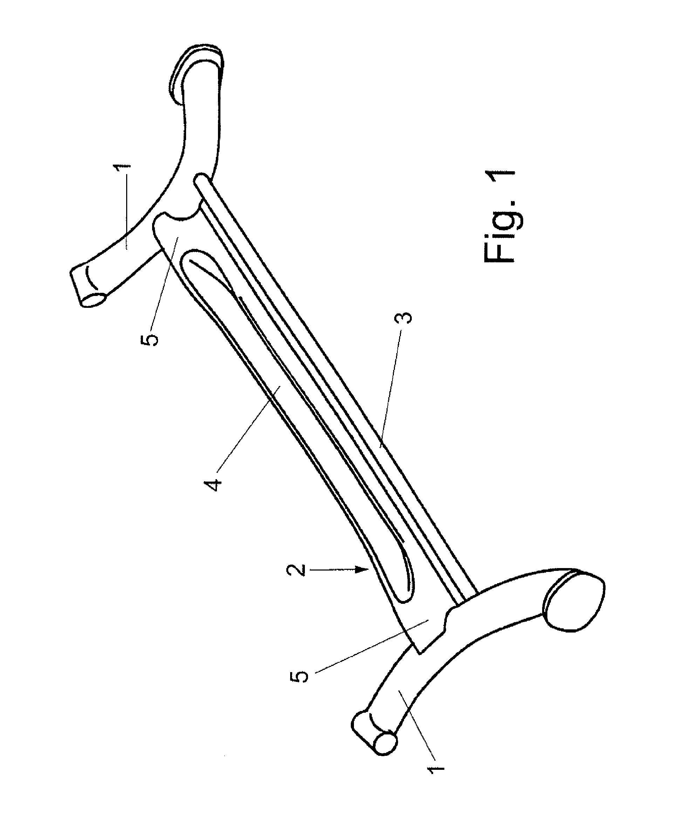

Erfindungsgemäß ist parallel zum Querträger 2 verlaufend ein Stabilisator 3 angeordnet und bei dem in der Figur 1 gezeigten Beispiel direkt starr an den Längsträgern 1 befestigt. Hierbei liegt der stabförmige Stabilisator 3 neben dem Querträger 2 mit geringem Abstand, vorzugsweise berührungslos dazu.

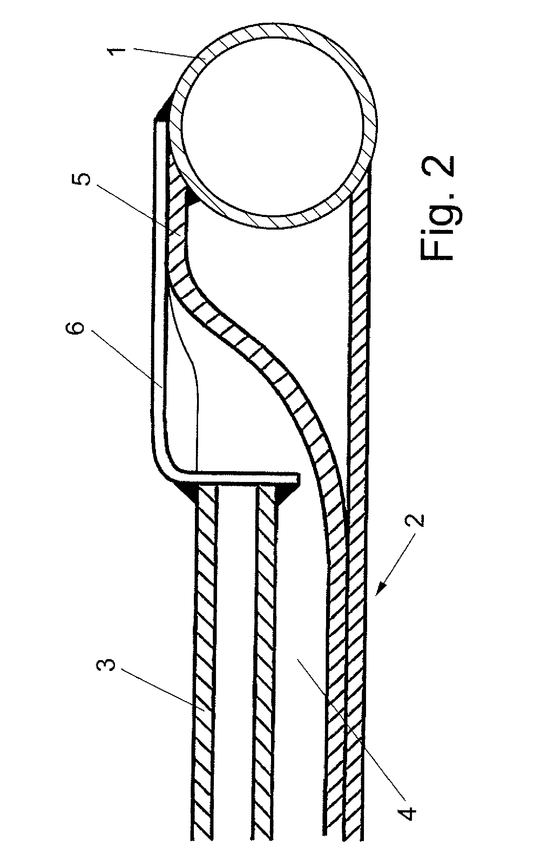

Bei dem in der Figur 2 gezeigten Beispiel ist der Stabilisator 3, der im Übrigen aus einem Rohr gebildet ist, innerhalb der Längsrinne 4 positioniert und zwar so, dass er berührungsfrei zu den Wandungen der Längsrinne 4 verläuft, jedoch gleichfalls parallel zur Längserstreckung des Querträgers 2.

Zur Befestigung des Stabilisators 3 sind endseitig winkelförmige Halterungen 6 angebracht, von denen in der Darstellung lediglich einer zu sehen ist und die fest mit dem jeweils zugeordneten Längsträger 1 verbunden sind.

In diesem Beispiel besteht keine unmittelbare Verbindung mit dem Querträger 2. Denkbar ist jedoch, den Stabilisator bzw. die Halterungen 6 direkt am Querträger 2 anzuschließen, wobei sich hierzu das jeweils zugeordnete rohrförmige Ende 5 des Querträgers 2 anbietet,

## Patentansprüche

1. Verbundlenkerachse, mit einem als Torsionsrohr ausgebildeten Querträger (2), der zwei jeweils an einem Längsträger (1) befestigte rohrartige Enden (5) aufweist, zwischen denen eine bereichsweise doppelwandige Längsrinne (4) eingeformt ist, **dadurch gekennzeichnet, dass** parallel zum Querträger (2) verlaufend ein Stabilisator (3) angeordnet ist, der direkt oder indirekt starr an den Längsträgern (1) angeschlossen ist.

2. Verbundlenkerachse nach Anspruch 1, **dadurch gekennzeichnet, dass** der Stabilisator (3) stabförmig ausgebildet ist.

3. Verbundlenkerachse nach Anspruch 1 oder 2, **dadurch gekennzeichnet, dass** der Stabilisator (3) aus einem Rohr besteht.

4. Verbundlenkerachse nach einem der vorhergehenden Ansprüche, **dadurch gekennzeichnet, dass** der Stabilisator (3) aus Vollmaterial gebildet ist.

5. Verbundlenkerachse nach einem der vorhergehenden Ansprüche, **dadurch gekennzeichnet, dass** der Stabilisator (3) neben dem Querträger (2) angeordnet ist.

6. Verbundlenkerachse nach einem der vorhergehenden Ansprüche, **dadurch gekennzeichnet, dass** der Stabilisator (3) in der Längsrinne (4) positioniert ist.

7. Verbundlenkerachse nach einem der vorhergehenden Ansprüche, **dadurch gekennzeichnet, dass** der in der Längsrinne (4) positionierte Stabilisator (3) an beiden Enden mit Halterungen (6) versehen ist, die mit dem jeweils zugeordneten Längsträger (1) verbunden sind.

8. Verbundlenkerachse nach einem der vorhergehenden Ansprüche, **dadurch gekennzeichnet, dass** die Halterungen (6) an den rohrartigen Enden (5) befestigt sind.
